# EUROPEAN PATENT SPECIFICATION

(11) **EP 4 304 807 B1**
(45) Date of publication and mention of the grant of the patent: **18.02.2026**
(21) Application number: 22710407.2
(22) Date of filing: 07.03.2022
(51) Int. Cl.: B24B 49/12, G02C 7/02, B24B 13/005, B29D 11/00

(54) **METHOD FOR AUTOMATICALLY CENTERING AN OPHTHALMIC LENS**
VERFAHREN ZUR AUTOMATISCHEN ZENTRIERUNG EINER OPHTHALMISCHEN LINSE
PROCÉDÉ DE CENTRAGE AUTOMATIQUE D'UNE LENTILLE OPHTALMIQUE

(30) Priority: 09.03.2021 EP 21305285
(43) Date of publication of application: 17.01.2024
(73) Proprietor: Essilor International, 94220 Charenton-Le-Pont (FR)
(72) Inventor: ROUSSEL, Laurent, 93320 LES PAVILLONS SOUS BOIS (FR); AMEURLAIN, Hugues, 92160 ANTONY (FR); HERFORT, David, 94300 VINCENNES (FR)
(74) Representative: Jacobacci Coralis Harle
(86) International application number: PCT/EP2022/055745
(87) International publication number: WO 2022/189352

(56) References cited:
- EP-A1- 4 455 769
- WO-A1-2007/001251
- US-A1- 2016 001 414
- US-A1- 2020 233 235

## Description

### TECHNICAL FIELD OF THE INVENTION

The present invention generally relates to the field of eyeglasses. It more particularly relates to a method of centering an ophthalmic lens, according to claim 1

### BACKGROUND INFORMATION AND PRIOR ART

The technical part of the work of an optician, which consists in mounting a pair of ophthalmic lenses in a spectacle frame selected by a customer, may be split into four main operations:
- the acquisition of the shapes of the outlines of the rims of the spectacle frame selected by the customer,
- the centering of each ophthalmic lens, which consists in determining the frame of reference of the lens using centering markings provided thereon, then in suitably positioning the outline of the rim acquired beforehand in the frame of reference of the lens so that, once edged to this outline then mounted in its frame, the lens is correctly positioned with respect to the corresponding eye of the customer and fulfils as best as possible the optical function for which it was designed,
- the blocking of each lens, which consists in attaching a blocking accessory to the lens, so that the lens can be easily extracted from the centering station and then be engaged in the edging station without loss of frame of reference, then
- the edging of each lens, which consists in machining this lens to the outline centered beforehand.

Here, the centering and blocking operations are more particularly of interest.

These operations are generally carried out by an optician, using a centering-blocking apparatus.

Such apparatuses are generally configured in the same way, with means for holding the ophthalmic lens, optical means for centering the ophthalmic lens, and blocking means for depositing the blocking accessory on the lens.

An exemplary centering-blocking apparatus is sold by the Applicant under the reference Mr Blue. In this apparatus, the optical centering means include a camera that is suitable to acquire images of the lens showing the centering markings of this lens, thereby allowing the apparatus to center the lens. The blocking means include an arm that is able to deposit the blocking accessory on the lens in a position deduced from the centering operation.

The lens centering markings usually comprise points or crosses situated on an optical point of the lens.

The lens centering markings however have sometimes shapes that make the centering operation difficult to implement. For instance, lens markings can be round micro-engravings, very numerous, and distributed along concentric circles.

With such lens markings, it is difficult for the apparatus to center the lens so as to deposit the blocking accessory on the optical point of the lens because this optical point is not marked.

US 2020/233235 A1 represents a comparative example.

### SUMMARY OF THE INVENTION

In this context, the present invention provides a method as disclosed in the introduction, well suited for centering ophthalmic lenses comprising several distinct centering markings (for instance distributed along at least one regular geometrical figure), wherein the step of processing comprises:
- determining, for at least three of said centering markings, the position of at least one characterization point of each centering mark, and
- deducing therefrom the position of the optical center of said ophthalmic lens.

Thanks to the invention, the centering is performed by considering not only one centering marking, but several centering markings, which enables accurately determining the position of the optical center of the lens. Moreover, this method avoids manual operation and operator's errors.

The invention also relates to a process of centering and blocking an ophthalmic lens, according to claim 12.

The invention also relates to a centering apparatus according to claim

Other preferred features of the invention are provided by the respective dependent claims.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic perspective view of a first embodiment of a centering and blocking apparatus according to the invention,
- Figure 2 is a schematic side view of the centering means of the centering and blocking apparatus shown in Figure 1,
- Figure 3 is a front view of a first example of a lens to be centered by means of the centering and blocking apparatus shown in Figure 1,
- Figure 4 is a view of the lens of figures 3, on which two determined regular geometrical figures are shown,
- Figure 5 is a front view of a second example of a lens to be centered by means of the centering and blocking apparatus shown in Figure 1, and
- Figure 6 is a schematic perspective view of a second embodiment of a centering and blocking apparatus according to the invention.

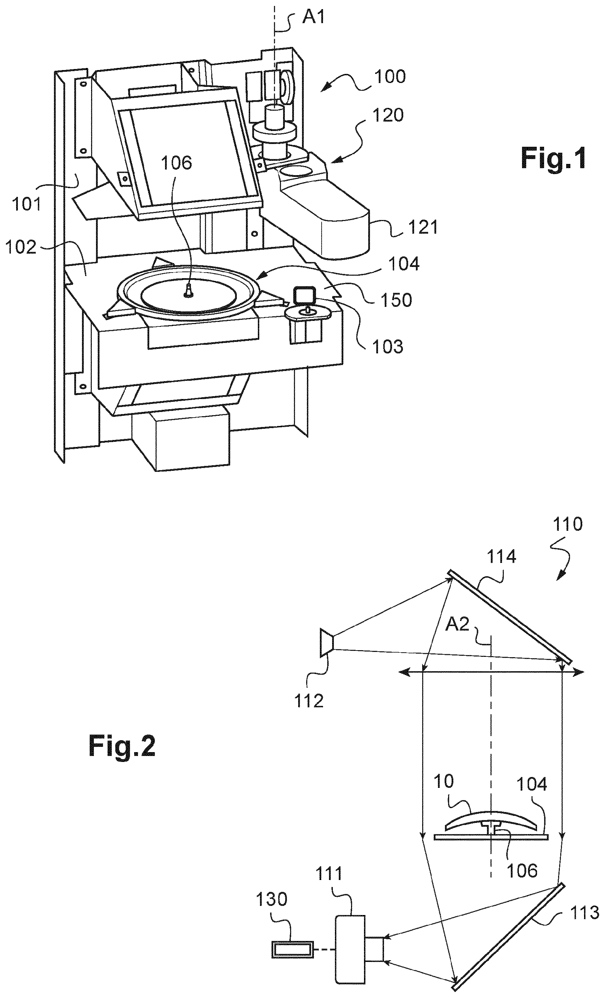

Figure 1 shows a first embodiment of an optical machine (hereinafter referred to as "the centering and blocking apparatus 100") for preparing an ophthalmic lens 10 with a view of its edging.

This apparatus is thus used to carry out centering and blocking operations for an ophthalmic lens 10 to be mounted on a spectacle frame.

When the shape of the contour according to which the lens has to be cutout is known, the objective of the centering operation is to identify the frame of reference of the ophthalmic lens 10 and to determine the position which said contour is intended to occupy in this frame of reference in order that the lens, once it has been cut out in a manner following this contour and then mounted on the spectacle frame, is located in a suitably centered manner opposite the corresponding eye of the individual.

The objective of the blocking operation is to place a blocking accessory 150 on the ophthalmic lens 10, which can, on the one hand, make it easier to take hold of the ophthalmic lens 10 in order to transport it from the centering and blocking apparatus 100 to a cutting-out unit (hereinafter referred to as "edging machine"), and, on the other hand, provide a stable reference mark for indicating the position of the frame of reference of the lens after it has been transported.

The centering-blocking apparatus 100 shown in Figure 1 is automatic in the sense in that the operation of searching the position of the frame of reference of the lens is performed automatically, without the help of an optician.

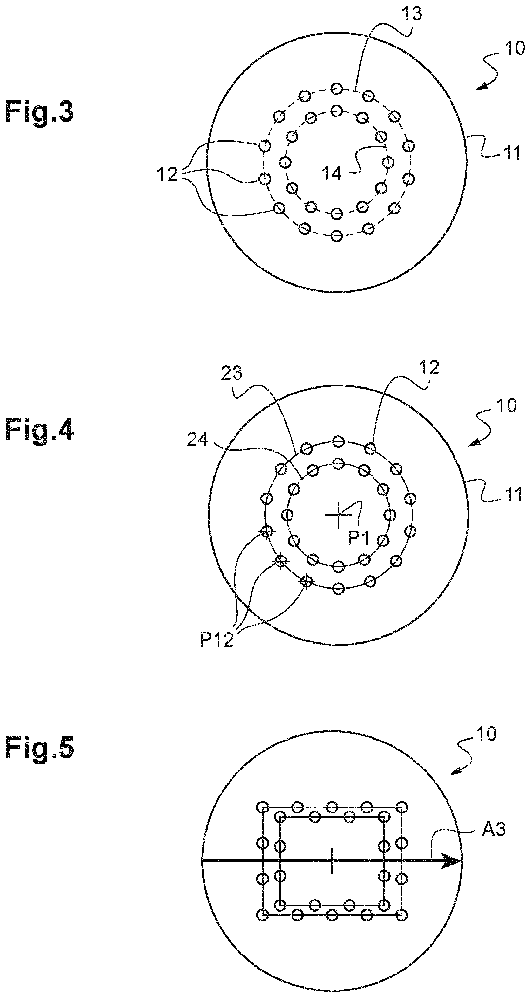

We note that, in the following, the frame of reference will be defined at least by the position of a point of the lens (the optical center P1 shown in Figure 4), and possibly by the orientation of an axis (the lens axis A3 shown in Figure 5).

The apparatus may have several shapes.

In the shown embodiment, the centering and blocking apparatus 100 comprises:
- a chassis 101,
- a workstation 102 that is fixed to the chassis 101 in a horizontal plane and that comprises a holder 103 for holding the blocking accessory 150,
- centering means 110 for centering the lens (see Fig. 2), said means being fixed to the chassis 101 and comprising at least an image sensor 111 for acquiring images of lenses,
- blocking means 120 for placing the blocking accessory 150 on the ophthalmic lens 10, said means being mounted so as to be able to move on the chassis 101, and
- a processing unit 130 (see Fig. 2) to control the centering means and the blocking means.

The workstation 102 comprises a transparent and planar support plate 104 at the center of which a holder 106 is provided for holding the ophthalmic lens 10. This holder is here a kind of rod having a widened head to support the lens. In a variant, the holder 106 could have a different shape or may be formed by the support plate 104.

The blocking means 120 comprise an operating arm 121 that includes a carrier able to take hold of the blocking accessory 150 and to depose it on the front face of the ophthalmic lens 10 placed on the transparent and planar support plate104.

The operating arm 121 is self-driven and has four degrees of freedom. It thus has a mobility in translation along a vertical axis A1 in order to rise or descend in the direction of the planar support plate 104 and a mobility in rotation about this axis A1 in order to move away from or toward the planar support plate 104. Its carrier (non visible) has a mobility in radial translation with respect to this axis A1 and a mobility in rotation about an axis parallel to this axis A1 (to adjust the orientation of the blocking accessory relative to the arm).

The means for centering the ophthalmic lens 10 are, for their part, designed to determine the position of the frame of reference of the ophthalmic lens 10.

As shown in figure 2, the centering means 110 comprise, on one side of the planar support plate 104, means for illuminating the lens placed onto the planar support plate 104, and, on the other side, image sensor means for acquiring the emitted light.

The illuminating means comprise a light source 112 which emits a light beam and a mirror 114 inclined at 45° which reflects this light beam towards the lens.

The image sensor means comprise an image sensor (here a camera 111) and a mirror 113 inclined at 45° which reflects the light beam towards the camera 111.

The optical axis A2 of the centering means 110 is defined as the axis of the light beam passing through the ophthalmic lens 10.

The processing unit 130 is programmed to center and block the ophthalmic lens 10.

To this end, the processing unit comprises a central processing unit (CPU), a memory and input/output components.

Thanks to its memory, the processing unit stores information used in the process described below. It particularly stores a computer application, consisting of computer programs comprising instructions, the execution of which allowing the implementation by the processing unit of the method described below.

This processing unit 130 is connected to the centering means 110 and to the blocking means 120.

In a preferred embodiment, it is also connected to a man-machine interface (here a touchscreen) to allow the optician to enter data useful for centering the lens.

The ophthalmic lens 10 to be edged is shown in Figure 3. This lens has two optical faces (namely a convex front face and a concave back face) and an edge 11, the shape of which is initially circular. The shapes of the front and back faces of this ophthalmic lens 10 are designed such that the lens has optical characteristics allowing defects in the vision of the customer to be corrected.

Here, the ophthalmic lens 10 includes a first optical correction for providing correct vision to the wearer at a determined distance, and a second optical correction for changing the natural evolution of Myopia.

The first optical correction consists, in our example, in a spherical power for providing correct far vision to the wearer (for looking at objects situated at more than 6 meters). In a variant, this first optical correction could also include a cylindrical and/or a prismatic power. In this variant, the lens comprises an optical axis that defines the orientation of the cylindrical and/or a prismatic power.

In our example, the optical center of the lens is defined as the point of the lens where the light rays are not deviated when they pass through the lens.

In a first embodiment, it can be assumed that the centering point of the ophthalmic lens 10, that is the point where the blocking accessory has to be deposited, is formed by this optical center P1.

In a second embodiment, the centering point is formed by the geometric center (called "boxing center") of a virtual rectangular box circumscribing the outline along which the lens will be edged.

In both embodiments, the centering and blocking apparatus 1 shall inform the edging apparatus in which point the blocking accessory is positioned.

The second optical correction provides an additional optical feature. This correction is specifically designed to limit or to stop the evolution of myopia.

In our example, the ophthalmic lens 10 contains to this end micro-lenses. Such an ophthalmic lens is described in document WO2019166654.

The ophthalmic lens 10 is provided with distinct centering markings 12 allowing its frame of reference to be located. These centering markings are distinct in the sense in that they have different positions so that their shape can be clearly distinguished from each other.

These markings may take the form of temporary marks printed in ink and/or permanent marks engraved into the lens (micro-engravings are spoken of).

Provisional markings generally allow the optical frame of reference of the lens to be suitably located prior to its mounting in the spectacle frame whereas permanent markings allow the nature and characteristics of the ophthalmic lens to be identified and, after the provisional markings have been removed, the exact location of said lens to be identified or reestablished.

Here, the ophthalmic lens 10 has only permanent markings for determining the position of the centering point P1 of the lens.

As shown in Figure 3, in this embodiment, these micro-engraved markings 12 are each round, they are very numerous, and they are distributed along regular geometrical figures about the centering point P1 of the ophthalmic lens 10.

More generally, the centering markings 12 are distributed along one or several regular geometrical figures.

Here a regular geometrical figure is defined as a figure whose shape is predetermined and can be found on an image of the lens.

This shape is preferably closed. It is preferably a polygon or a closed curve (a circle, an oval....) or a combination of segments and curves.

In the example of Figure 3, they are distributed along two virtual coaxial circles 13, 14 (represented in dot line because they are not marked onto the lens). Each virtual circle comprises more than ten markings 12. In a preferred embodiment, the centering markings 12 are distributed along more than three coaxial virtual circles.

In a variant shown in Figure 5, the centering markings 12 are distributed along two coaxial virtual rectangles. In this variant, the longest sides of these rectangles are oriented in parallel with the optical axis of the lens when the latter has a cylindrical and/or a prismatic power.

Other variants could be considered. For instance, the centering markings 12 could distributed along diamonds, squares, stars, pentagons, hexagonal...

The centering markings 12 of a single regular geometrical figure all have the same shape, namely a circle shape with the same diameter. Here, all the centering markings 12 have the same diameter. This diameter is lower than 1 mm.

In the disclosed embodiment, these centering markings 12 are formed by the contours of the microlenses that are engraved in one of the optical faces of the lens to fulfill the second optical correction.

Here, the ophthalmic lens 10 is intended to be automatically centered and blocked.

To this end, during a prior step, the ophthalmic lens 10 is positioned manually or automatically on the holder 106. Here, the optician deposits the ophthalmic lens 10 on the upper end of the holder 106, in such a way that the convex front face is directed away from this holder 106.

Then, during a first step, the processing unit 130 is programmed to acquire, by means of the camera 111, an image of the lens supported by the holder 106.

Thanks to the centering means 110 of the apparatus, the centering markings 12 of the ophthalmic lens 10 are visible on this image.

During a second step, this image is processed in order to locate the contour of each centering marking 12.

On the basis of these contours, the processing unit 130 determines, for at least three of the detected centering markings 12 (and preferably for all of them), the position of a characterization point P12.

A characterization point P12 is defined as a point suitable to be distinguished among all the points of the marking. Such a point is able to characterize the position of the centering marking 12. It can be for instance the center of the marking, or its barycenter, or one of its corners...

In a preferred embodiment, this characterization point P12 is the geometrical center of the centering marking 12. Because each centering marking 12 is circle-shaped, the characterization point P12 is the center of the circle.

At this step, the processing unit 130 determines if some of the centering markings are distributed along a closed contour. In a variant, if the optician has filled a field on the touchscreen indicating that the centering markings 12 are distributed along circles, this operation can be skipped.

In our example, when it has detected that the centering markings are distributed along at least one circle, the processing unit 130 detects the number of coaxial circles along which the centering markings 12 are distributed. Here, two circles are detected.

The, the processing unit 130 virtually positions two determined regular geometrical figures 23, 24 on the acquired image and scales them so that these determined regular geometrical figures 23, 24 passe through the characterization points P12 of the centering markings 12 (see Figure 4).

Here, the geometrical figures 23, 24 are "determined" in the sense in that their type (circle, ...) is already known at this step. This type is the same as the one of the virtual figures 13, 14.

In the disclosed embodiment, because the processing unit has detected that the centering markings are distributed along two virtual circles, the determined regular geometrical figures 23, 24 to position are also two circles.

In a variant, the type of geometrical figures 23, 24 can be manually selected or can been always the same (the processing unit 130 can be programmed to always position the same type of geometrical figures 23, 24, for instance circles).

These operations of positioning and scaling the determined regular geometrical figures 23, 24 can be performed in various ways.

For instance, the processing unit may try to superimpose each circle on the maximum of characterization points P12, step by step, by trying different positions and diameters until it reaches a best position.

But in a preferred embodiment, the processing unit 130 starts by defining several groups of centering markings 12, the centering markings 12 of each group being distributed along a same regular geometrical figure 13, 14. Here, two groups are defined (see figure 3).

Then, for each group of centering markings 12, the processing unit 130 positions and scales the corresponding determined regular geometrical figure 23, 24 by a least square fitting method, so as to minimize the sum of distances between this figure and the characterization points P12 of the centering markings 12.

During a third step, the processing unit 130 determines the positions of the centers of these determined regular geometrical figures 23, 24.

In the example of Figure 4, the processing unit 130 determines the positions of the centers of two circles. In the example of Figure 5, the processing unit 130 determines the positions of the centers of two rectangles.

Then, the optical center P1 of the ophthalmic lens 10 is located by the processing unit 130 at the mean position of these centers.

During a fourth step, performed if the lens comprises an optical axis A3 that defines the orientation of a cylindrical and/or prismatic power (Figure 5), the processing unit 130 determines the orientation of at least one of the longest sides of the determined regular geometrical figures 23, 24.

Then, it deduces therefrom the orientation of the optical axis A3.

In a variant, this orientation may be deduced from the orientation of each longest side of each determined regular geometrical figure 23, 24 (by calculating the average of these orientations).

Finally, the final step consists in blocking the ophthalmic lens 10 by means of the blocking accessory 150.

To this end, the optician loads a blocking accessory 150 on the vertical shaft of the holder 103.

Then, the blocking arm 121 is moved by the processing unit 130 to take hold the blocking accessory 150 and to depose it onto the front face of the lens.

In a first embodiment, the blocking accessory 150 is positioned on the optical center P1 of the ophthalmic lens 10.

In a variant, the blocking accessory 150 is deposited on another centering point. In this variant, the position of this centering point relative to the optical center P1 is determined and sent to the edging machine in view of the edging of said ophthalmic lens 10.

The present invention is in no way limited to the embodiment described and shown.

For example, the centering process described above is not only applicable to the blocking and edging but can be used also for stamping or engraving on a lens.

In a first variant, we could envisage that the diameters of the circles 13, 14 along which the centering markings 12 are distributed are well known, so that it is not necessary to scale the regular geometrical figures 23, 24.

But this variant is not preferred for the following reasons.

The size of the centering markings 12 and of the circles 13, 14 can vary because of scale modifications due to the lens power; so, depending on the lens spherical power, the circles diameters can change.

Moreover, lenses of different brands may show centering markings having different sizes, that is why it is advantageous to enable the diameters of the regular geometrical figures 23, 24 to be scalable.

In another variant, the characterization point (P12) of each centering marking could be formed by a barycenter of this marking or by a corner of this marking (for instance if the latter is square-shaped or triangle-shaped).

In another variant, the optical center (P1) may be calculated as the point for which its distances to the characterization points have the smallest standard deviation.

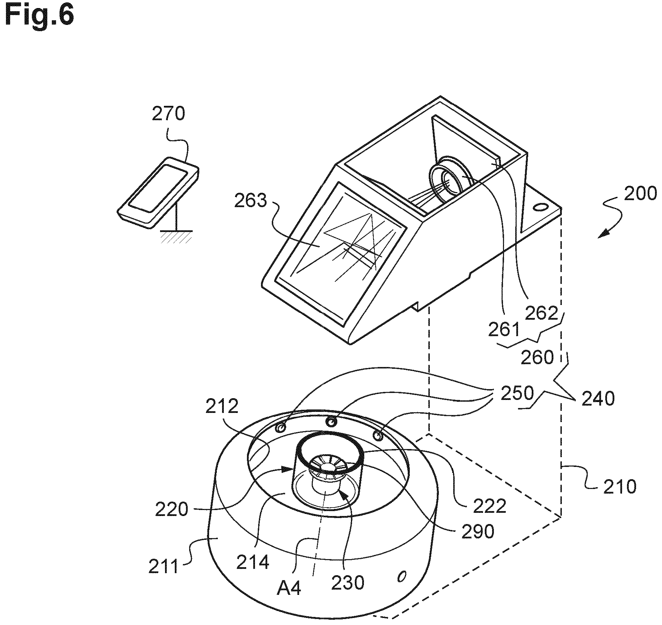

Figure 6 shows a second embodiment of the centering and blocking apparatus 200.

In this embodiment, the apparatus is designed so that the blocking operation can be manually performed.

The centering and blocking apparatus 200 includes for this purpose at least:
- a chassis 210,
- a holder 220 mounted on the chassis 210 and suitable for receiving the ophthalmic lens,
- blocking means 230 mounted on the chassis 210 and suitable for receiving the blocking accessory 290, and
- centering means 240 mounted on the chassis 210, which include a sighting objective thanks to which the optical frame of reference of the ophthalmic lens can be viewed.

In the shown embodiment, the blocking means 230 are fixedly mounted on the chassis 210, and it is the holder 220 that is movably mounted on the chassis 210.

The chassis 210 includes a dome 211. This dome 211 has a sidewall the top face of which is apertured with a large circular aperture 212 centered on a main axis A4 that here is vertical. It also includes a bottom that lies in a horizontal plane and that closes the back of the sidewall. It lastly includes, at mid-height, a false bottom 214.

This false bottom 214 is visible through the large circular aperture 212. It has in its center a circular hole centered on the main axis A4.

The blocking means 230 include a vertical shaft that is centered on the main axis A4. This vertical shaft has a lower end that is secured to the chassis and a free upper end for accommodating the blocking accessory 290.

The holder 220 is a transparent and vertical tube mounted on the chassis 210 so as to be able to slide along the main axis A4.

The upper end 222 of the holder 220 is circular and extends in a horizontal plane, such that it is suitable to support the ophthalmic lens.

This holder 220 is more precisely mounted so as to be movable between:
- a centering position in which the ophthalmic lens rested on the upper end 222 of the holder 220 is located a distance away from the blocking accessory 290, and
- a blocking position in which the ophthalmic lens bears against the blocking accessory 290.

An elastic element, suitable for automatically returning the holder 220 to the centering position, is provided inside the dome 211.

The centering means 240 include means 250 for illuminating the ophthalmic lens and means 260 for viewing the ophthalmic lens illuminated by the illuminating means 250.

The illuminating means 250 are light-emitting diodes regularly distributed all around the holder 220, so as to generate light of grazing incidence on the optical face of the lens that is placed on the holder 220 (here on the convex front face, in which the centering markings are engraved).

The viewing means 260 comprise a mirror 263 that is inclined at 45° with respect to the main axis A4 and that allows the image of the ophthalmic lens to be redirected toward the objective 261 of a digital video camera 262. This mirror 263 allows the centering-blocking apparatus 200 to be made more compact.

The digital video camera 262 is then designed to acquire an image of the ophthalmic lens and to transmit it to a viewing screen 270 that is oriented toward the face of the optician.

Thus, the optician may observe in real-time on this viewing screen 270 the image of the ophthalmic lens.

The centering-blocking apparatus 200 also comprises a processing unit (not visible) programmed to help the optician in centering and blocking the ophthalmic lens.

To this end, the processing unit comprises a central processing unit (CPU), a memory and input/output components. Thanks to its memory, the processing unit stores information used in the process described below.

In this second embodiment, the ophthalmic lens is intended to be automatically centered but manually blocked.

To this end, during a prior step, the blocking accessory 290 is accommodated on the upper end of the shaft 230 and the ophthalmic lens is positioned manually on the holder 220.

Then, during a first step, the processing unit is programmed to acquire, by means of the camera 262, an image of the lens supported by the holder 220.

During a second step, this image is processed in order to locate the contour of each lens centering marking.

During a third step, the processing unit detects and positions the circles along which the centering markings are distributed.

During a fourth step, the processing unit determines the positions of the centers of these circles.

These four steps are performed on the same way as those described above (in the first embodiment of the invention).

Then, during a fifth step, the processing unit, that is connected to the viewing screen 70, displays two reticles superimposed to the images acquired by the camera 262.

A first reticle indicates the center of the blocking accessory 290.

A second reticle indicates the center of the detected circles.

Thanks to these reticles, an optician can manually adjust the position of the ophthalmic lens relative to the holder 220 so that the second reticle come exactly on the first one.

We note that, during the fifth step, the first four steps are performed in loop, in order to correct the position of the second reticle when the optician moves the lens.

When the two reticles are exactly superimposed, the holder 220 is manually moved from its centering position to its blocking position so that the ophthalmic lens bears and glues against the blocking accessory 290.

## Claims

1. Method of centering an ophthalmic lens (10), comprising steps of:
- positioning the ophthalmic lens (10) on a part (106) of a centering apparatus (100),
- acquiring at least one image of said ophthalmic lens (10) by means of an image sensor (111), and
- processing said image to find the position of an optical center (P1) of said ophthalmic lens (10) by means of a processing unit (130),
**characterized in that**, said ophthalmic lens (10) comprising several distinct centering markings (12), said step of processing comprises:
- determining, for at least three of said centering markings (12), the position of at least one characterization point (P12) of each centering mark (12), and
- deducing therefrom the position of the optical center (P1) of said ophthalmic lens (10).

2. Method of centering an ophthalmic lens (10) according to claim 1, wherein the characterization point (P12) is a geometrical center of the centering marking (12).

3. Method of centering an ophthalmic lens (10) according to claim 1 or 2, wherein the position of the optical center (P1) of said ophthalmic lens (10) is determined as a function of the position of the characterization points (P12) of all the centering markings (12) of the ophthalmic lens (10).

4. Method of centering an ophthalmic lens (10) according to any one of claims 1 to 3, wherein said distinct centering markings (12) are distributed along a virtual regular geometrical figure (13, 14), said step of processing comprises the positioning of a determined regular geometrical figure (23, 24) on the acquired image so that this determined regular geometrical figure passes (23, 24) through the characterization points (P12) of said at least three centering markings (12), and wherein the position of the optical center (P1) is deduced from the position of said determined regular geometrical figure (23, 24).

5. Method of centering an ophthalmic lens (10) according to claim 4, wherein said step of processing also comprises the scale of said determined regular geometrical figure (23, 24) so that this determined regular geometrical figure passes (23, 24) through the characterization points (P12) of said at least three centering markings (12).

6. Method of centering an ophthalmic lens (10) according to claim 4 or 5, wherein the positioning and, if any, the scale of said determined regular geometrical figure is performed by a least square fitting method.

7. Method of centering an ophthalmic lens (10) according to any one of claims 4 to 6, wherein the shape of said determined regular geometrical figure (23, 24) is determined either manually or automatically by the processing unit (130) on the basis of the acquired image.

8. Method of centering an ophthalmic lens (10) according to any one of claims 4 to 7, wherein said determined regular geometrical figure (23, 24) does not exhibit a symmetry of revolution and wherein said method comprises a step of deducing a lens axis (A3) from the orientation of said determined regular geometrical figure (23, 24).

9. Method of centering an ophthalmic lens (10) according to any one of claims 4 to 8, wherein said virtual regular geometrical figure (13, 14) is a polygon or a closed curve or a combination of segments and curves.

10. Method of centering an ophthalmic lens (10) according to claim 9, wherein said virtual regular geometrical figure (13, 14) is a circle or a rectangle or a diamond or hexagonal.

11. Method of centering an ophthalmic lens (10) according to any one of claims 4 to 10, wherein, the centering markings (110) are distributed along at least two coaxial virtual regular geometrical figures (13, 14) of the same type.

12. Process of centering and blocking an ophthalmic lens (10), comprising:
- a first operation of centering said ophthalmic lens (10) according to any one of claims 1 to 11, and
- a second operation of blocking said ophthalmic lens (10) by means of a blocking accessory (150) that is deposited onto the ophthalmic lens (10) in a blocking position.

13. Process according to claim 12, wherein said blocking position is:
- the position of the optical center (P1) of said ophthalmic lens (10), or
- another position, said blocking position relative to said optical center (P1) being determined and sent to an edging machine in view of the edging of said ophthalmic lens (10).

14. Process according to claim 12 or 13, wherein, before depositing the blocking accessory (150) onto the ophthalmic lens (10):
- the position of the blocking accessory (150) relative to the ophthalmic lens (10) is automatically adjusted, while the lens remains stationary relative to said part (106), or
- the position of the ophthalmic lens (10) relative to said part (106) is manually adjusted.

15. A centering apparatus (100) including:
- a chassis (101),
- a part (106) mounted on the chassis (101), which is suitable for receiving an ophthalmic lens (10), and
- centering means (110) mounted on the chassis (101), which include an image sensor (111) for acquiring images of the ophthalmic lens (10) when received on the part (106),
**characterized in that** is also comprises a processing unit (130) programmed for performing a step of processing of a method according to any one of claims 1 to 11 or of a process according to any one of claims 12 to 14.

## Patentansprüche

1. Verfahren zum Zentrieren einer ophthalmischen Linse (10), das die folgenden Schritte umfasst:
- Anordnen der ophthalmischen Linse (10) auf einer Komponente (106) einer Zentriervorrichtung (100),
- Erfassen mindestens eines Bilds der ophthalmischen Linse (10) mittels eines Bildsensors (111), und
- Verarbeiten des Bilds, um die Position eines optischen Mittelpunkts (P1) der ophthalmischen Linse (10) zu finden, mittels einer Verarbeitungseinheit (130),
**dadurch gekennzeichnet, dass** die ophthalmische Linse (10) mehrere deutlich ausgeprägte Zentrierungsmarkierungen (12) aufweist, wobei der Schritt des Verarbeitens Folgendes umfasst:
- Bestimmen für mindestens drei der Zentrierungsmarkierungen (12) der Position mindestens eines Kennzeichnungspunkts (P12) jeder Zentrierungsmarkierung (12), und
- Ableiten der Position des optischen Mittelpunkts (P1) der ophthalmischen Linse (10) davon.

2. Verfahren zum Zentrieren einer ophthalmischen Linse (10) nach Anspruch 1, wobei der Kennzeichnungspunkt (P12) ein geometrischer Mittelpunkt der Zentrierungsmarkierung (12) ist.

3. Verfahren zum Zentrieren einer ophthalmischen Linse (10) nach Anspruch 1 oder 2, wobei die Position des optischen Mittelpunkts (P1) der ophthalmischen Linse (10) als eine Funktion der Position der Kennzeichnungspunkte (P12) aller Zentrierungsmarkierungen (12) der ophthalmischen Linse (10) bestimmt wird.

4. Verfahren zum Zentrieren einer ophthalmischen Linse (10) nach einem der Ansprüche 1 bis 3, wobei die deutlich ausgeprägten Zentrierungsmarkierungen (12) entlang einer virtuellen regulären geometrischen Figur (13, 14) verteilt sind, der Schritt des Verarbeitens das Anordnen einer bestimmten regulären geometrischen Figur (23, 24) auf dem erfassten Bild, derart, dass diese bestimmte reguläre geometrische Figur (23, 24) durch die Kennzeichnungspunkte (P12) der mindestens drei Zentrierungsmarkierungen (12) verläuft, umfasst und wobei die Position des optischen Mittelpunkts (P1) aus der Position der bestimmten regulären geometrischen Figur (23, 24) abgeleitet wird.

5. Verfahren zum Zentrieren einer ophthalmischen Linse (10) nach Anspruch 4, wobei der Schritt des Verarbeitens außerdem die Skalierung der bestimmten regulären geometrischen Figur (23, 24), derart, dass diese bestimmte reguläre geometrische Figur (23, 24) durch die Kennzeichnungspunkte (P12) der mindestens drei Zentrierungsmarkierungen (12) verläuft, umfasst.

6. Verfahren zum Zentrieren einer ophthalmischen Linse (10) nach Anspruch 4 oder 5, wobei das Positionieren und, falls vorhanden, das Skalieren der bestimmten regulären geometrischen Figur durch ein Anpassungsverfahren der kleinsten Quadrate durchgeführt wird.

7. Verfahren zum Zentrieren einer ophthalmischen Linse (10) nach einem der Ansprüche 4 bis 6, wobei die Form der bestimmten regulären geometrischen Figur (23, 24) entweder manuell oder automatisch durch die Verarbeitungseinheit (130) auf der Grundlage des erfassten Bilds bestimmt wird.

8. Verfahren zum Zentrieren einer ophthalmischen Linse (10) nach einem der Ansprüche 4 bis 7, wobei die bestimmte reguläre geometrische Figur (23, 24) keine Rotationssymmetrie aufweist und wobei das Verfahren einen Schritt des Ableitens einer Linsenachse (A3) aus der Orientierung der bestimmten regulären geometrischen Figur (23, 24) umfasst.

9. Verfahren zum Zentrieren einer ophthalmischen Linse (10) nach einem der Ansprüche 4 bis 8, wobei die virtuelle reguläre geometrische Figur (13, 14) ein Polygon oder eine geschlossene Kurve oder eine Kombination aus Segmenten und Kurven ist.

10. Verfahren zum Zentrieren einer ophthalmischen Linse (10) nach Anspruch 9, wobei die virtuelle reguläre geometrische Figur (13, 14) ein Kreis oder ein Rechteck oder eine Raute oder sechseckig ist.

11. Verfahren zum Zentrieren einer ophthalmischen Linse (10) nach einem der Ansprüche 4 bis 10, wobei die Zentrierungsmarkierungen (110) entlang mindestens zweier koaxialer virtueller regulärer, geometrischer Figuren (13, 14) desselben Typs angeordnet sind.

12. Prozess zum Zentrieren und Blockieren einer ophthalmischen Linse (10), der Folgendes umfasst:
- einen ersten Vorgang des Zentrierens der ophthalmischen Linse (10) nach einem der Ansprüche 1 bis 11, und
- einen zweiten Vorgang des Blockierens der ophthalmischen Linse (10) mittels eines Blockierhilfsmittels (150), das an einer Blockierposition auf die ophthalmische Linse (10) aufgesetzt wird.

13. Prozess nach Anspruch 12, wobei die Blockierposition Folgendes ist:
- die Position des optischen Mittelpunkts (P1) der ophthalmischen Linse (10), oder
- eine andere Position, wobei die Blockierposition in Bezug auf den optischen Mittelpunkt (P1) bestimmt wird und im Hinblick auf die Kantenbearbeitung der ophthalmischen Linse (10) an eine Kantenbearbeitungsmaschine gesendet wird.

14. Prozess nach Anspruch 12 oder 13, wobei vor dem Aufsetzen des Blockierhilfsmittels (150) auf die ophthalmische Linse (10):
- die Position des Blockierhilfsmittels (150) in Bezug auf die ophthalmische Linse (10) automatisch eingestellt wird, während die Linse in Bezug auf die Komponente (106) ortsfest bleibt, oder
- die Position der ophthalmischen Linse (10) in Bezug auf die Komponente (106) manuell eingestellt wird.

15. Zentriervorrichtung (100), die Folgendes umfasst:
- einen Rahmen (101),
- eine Komponente (106), die auf dem Rahmen (101) angebracht ist, die zum Aufnehmen einer ophthalmischen Linse (10) geeignet ist, und
- Zentrierungsmittel (110), die auf dem Rahmen (101) angebracht sind, die einen Bildsensor (111) zum Erfassen von Bildern der ophthalmischen Linse (10), wenn sie auf der Komponente (106) aufgenommen ist, enthalten,
**dadurch gekennzeichnet, dass** sie außerdem eine Verarbeitungseinheit (130), die zum Durchführen eines Schritts des Verarbeitens eines Verfahrens nach einem der Ansprüche 1 bis 11 oder eines Prozesses nach einem der Ansprüche 12 bis 14 programmiert ist, umfasst.

## Revendications

1. Procédé de centrage d'une lentille ophtalmique (10), comprenant les étapes suivantes :
- positionnement de la lentille ophtalmique (10) sur une pièce (106) d'un appareil de centrage (100),
- acquisition d'au moins une image de ladite lentille ophtalmique (10) au moyen d'un capteur d'images (111), et
- traitement de ladite image pour trouver la position d'un centre optique (P1) de ladite lentille ophtalmique (10) au moyen d'une unité de traitement (130),
**caractérisé en ce que**, ladite lentille ophtalmique (10) comprenant plusieurs marques de centrage distinctes (12), ladite étape de traitement comprend :
- la détermination, pour au moins trois desdites marques de centrage (12), de la position d'au moins un point de caractérisation (P12) de chaque marque de centrage (12), et
- la déduction de celles-ci de la position du centre optique (P1) de ladite lentille ophtalmique (10).

2. Procédé de centrage d'une lentille ophtalmique (10) selon la revendication 1, dans lequel le point de caractérisation (P12) est un centre géométrique de la marque de centrage (12).

3. Procédé de centrage d'une lentille ophtalmique (10) selon la revendication 1 ou 2, dans lequel la position du centre optique (P1) de ladite lentille ophtalmique (10) est déterminée en fonction de la position des points de caractérisation (P12) de toutes les marques de centrage (12) de la lentille ophtalmique (10).

4. Procédé de centrage d'une lentille ophtalmique (10) selon l'une quelconque des revendications 1 à 3, dans lequel lesdites marques de centrage distinctes (12) sont réparties le long d'une figure géométrique régulière virtuelle (13, 14), ladite étape de traitement comprend le positionnement d'une figure géométrique régulière déterminée (23, 24) sur l'image acquise de telle sorte que cette figure géométrique régulière déterminée (23, 24) passe par les points de caractérisation (P12) desdites au moins trois marques de centrage (12), et dans lequel la position du centre optique (P1) est déduite de la position de ladite figure géométrique régulière déterminée (23, 24).

5. Procédé de centrage d'une lentille ophtalmique (10) selon la revendication 4, dans lequel ladite étape de traitement comprend également l'échelle de ladite figure géométrique régulière déterminée (23, 24) de telle sorte que cette figure géométrique régulière déterminée (23, 24) passe par les points de caractérisation (P12) desdites au moins trois marques de centrage (12).

6. Procédé de centrage d'une lentille ophtalmique (10) selon la revendication 4 ou 5, dans lequel le positionnement et, le cas échéant, l'échelle de ladite figure géométrique régulière déterminée sont effectués par un procédé d'ajustement par les moindres carrés.

7. Procédé de centrage d'une lentille ophtalmique (10) selon l'une quelconque des revendications 4 à 6, dans lequel la forme de ladite figure géométrique régulière déterminée (23, 24) est déterminée soit manuellement, soit automatiquement par l'unité de traitement (130), sur la base de l'image acquise.

8. Procédé de centrage d'une lentille ophtalmique (10) selon l'une quelconque des revendications 4 à 7, dans lequel ladite figure géométrique régulière déterminée (23, 24) ne présente pas de symétrie de révolution et dans lequel ledit procédé comprend une étape de déduction d'un axe de lentille (A3) à partir de l'orientation de ladite figure géométrique régulière déterminée (23, 24).

9. Procédé de centrage d'une lentille ophtalmique (10) selon l'une quelconque des revendications 4 à 8, dans lequel ladite figure géométrique régulière virtuelle (13, 14) est un polygone ou une courbe fermée ou une combinaison de segments et de courbes.

10. Procédé de centrage d'une lentille ophtalmique (10) selon la revendication 9, dans lequel ladite figure géométrique régulière virtuelle (13, 14) est un cercle ou un rectangle ou un losange ou un hexagone.

11. Procédé de centrage d'une lentille ophtalmique (10) selon l'une quelconque des revendications 4 à 10, dans lequel les marques de centrage (110) sont réparties le long d'au moins deux figures géométriques régulières virtuelles coaxiales (13, 14) du même type.

12. Procédé de centrage et de blocage d'une lentille ophtalmique (10), comprenant :
- une première opération de centrage de ladite lentille ophtalmique (10) selon l'une quelconque des revendications 1 à 11, et
- une deuxième opération de blocage de ladite lentille ophtalmique (10) au moyen d'un accessoire de blocage (150) qui est déposé sur la lentille ophtalmique (10) dans une position de blocage.

13. Procédé selon la revendication 12, dans lequel ladite position de blocage est :
- la position du centre optique (P1) de ladite lentille ophtalmique (10), ou
- une autre position, ladite position de blocage par rapport audit centre optique (P1) étant déterminée et envoyée à une machine de détourage en vue du détourage de ladite lentille ophtalmique (10).

14. Procédé selon la revendication 12 ou 13 dans lequel, avant le dépôt de l'accessoire de blocage (150) sur la lentille ophtalmique (10) :
- la position de l'accessoire de blocage (150) par rapport à la lentille ophtalmique (10) est réglée automatiquement, pendant que la lentille reste fixe par rapport à ladite pièce (106), ou
- la position de la lentille ophtalmique (10) par rapport à ladite pièce (106) est réglée manuellement.

15. Appareil de centrage (100) comportant :
- un châssis (101),
- une pièce (106) montée sur le châssis (101), qui est appropriée pour recevoir une lentille ophtalmique (10), et
- des moyens de centrage (110) montés sur le châssis (101), qui comportent un capteur d'images (111) destiné à acquérir des images de la lentille ophtalmique (10) lorsqu'elle est reçue sur la pièce (106),
**caractérisé en ce qu'**il comprend également une unité de traitement (130) programmée pour effectuer une étape de traitement d'un procédé selon l'une quelconque des revendications 1 à 11 ou d'un procédé selon l'une quelconque des revendications 12 à 14.
